# EUROPEAN PATENT APPLICATION

(11) **EP 4 369 647 A1**
(43) Date of publication of application: **15.05.2024**
(21) Application number: 23209815.2
(22) Date of filing: 14.11.2023
(51) Int. Cl.: H04L 5/00, H04W 56/00, H04W 74/0808

(54) **TRANSMISSION METHODS OF SL OVER UNLICENSED SPECTRUM**

(30) Priority: 14.11.2022 WO PCT/CN2022/131713; 09.11.2023 CN 202311491255
(71) Applicant: MediaTek Singapore Pte. Ltd., Singapore 138628 (SG)
(72) Inventor: CHENG, Junqiang, Beijing (CN); CHEN, Tao, Beijing (CN); CHEN, Jing-Wei, Hsinchu City (TW)
(74) Representative: Patentship Patentanwaltsgesellschaft mbH

(57) **Abstract**

A UE (250) obtains a channel occupancy time (COT) for a set of resources on a sidelink (SL) in an unlicensed spectrum through a channel access procedure. The UE (250) determines whether a frequency division multiplexing (FDM) transmission scheme is utilized for a SL transmission on the sidelink in the COT. The LTE (250) selects a cyclic prefix extension (CPE) starting position prior to an initial symbol containing the SL transmission. The UE (250) selects the default CPE starting position as the CPE starting position when the FDM transmission scheme is utilized. The LTE (250) randomly selects the CPE starting position from a subset of a set of all candidate CPE starting positions based on an L1 priority of the SL transmission when the FDM transmission scheme is not utilized. The UE (250) transmits a CPE at the selected CPE starting position and performs the SL transmission after the CPE transmission.

## Description

### BACKGROUND

### Field

The present disclosure relates generally to communication systems, and more particularly, to techniques of transmitting a cyclic prefix extension (CPE) over unlicensed spectrum on a sidelink.

### Background

The statements in this section merely provide background information related to the present disclosure and may not constitute prior art.

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect of the disclosure, a method, a computer-readable medium, and an apparatus are provided. The apparatus may be a user equipment (UE). The UE obtains a channel occupancy time (COT) for a set of resources on a sidelink (SL) in an unlicensed spectrum through a channel access procedure. The UE determines whether a frequency division multiplexing (FDM) transmission scheme is utilized for a SL transmission on the sidelink in the COT. The UE selects a cyclic prefix extension (CPE) starting position prior to an initial symbol containing the SL transmission. The UE selects the default CPE starting position as the CPE starting position when the FDM transmission scheme is utilized. The UE randomly selects the CPE starting position from a subset of a set of all candidate CPE starting positions based on an L1 priority of the SL transmission when the FDM transmission scheme is not utilized. The UE transmits a CPE at the selected CPE starting position. The UE performs the SL transmission after the CPE transmission.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIG. 2 is a diagram illustrating a base station in communication with a UE in an access network.
FIG. 3 illustrates an example logical architecture of a distributed access network.
FIG. 4 illustrates an example physical architecture of a distributed access network.
FIG. 5 is a diagram showing an example of a DL-centric slot.
FIG. 6 is a diagram showing an example of an LTL-centric slot.
FIG. 7 is a diagram illustrating CPE starting positions.
FIG. 8 is a diagram illustrating CPE selection.
FIG. 9 is a flow chart of a method (process) for transmitting a CPE.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunications systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

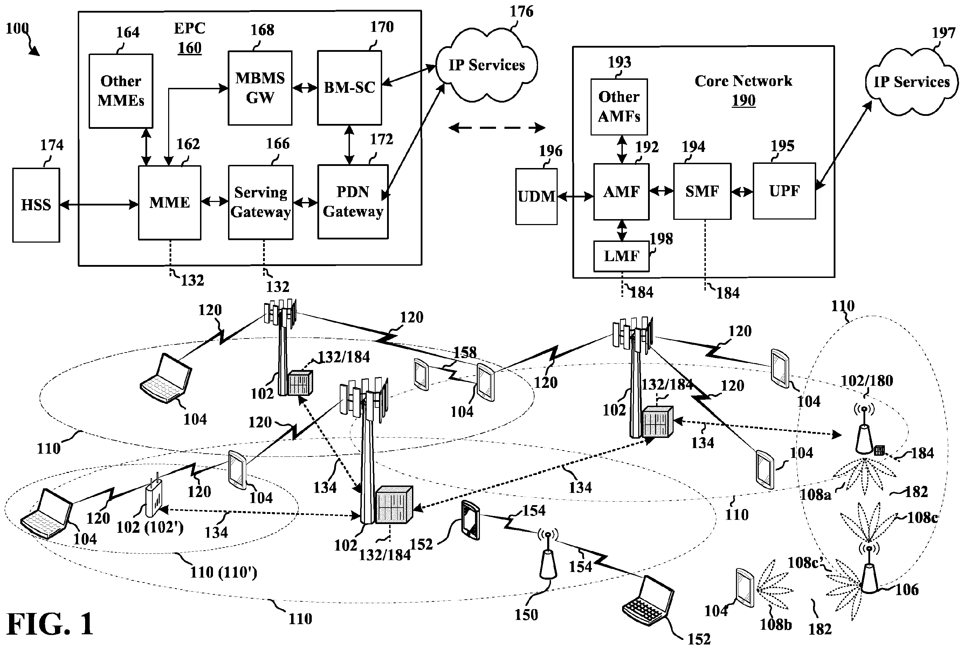

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through backhaul links 132 (e.g., SI interface). The base stations 102 configured for 5G NR (collectively referred to as Next Generation RAN (NG-RAN)) may interface with core network 190 through backhaul links 184. In addition to other functions, the base stations 102 may perform one or more of the following functions: transfer of user data, radio channel ciphering and deciphering, integrity protection, header compression, mobility control functions (e.g., handover, dual connectivity), inter cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over backhaul links 134 (e.g., X2 interface). The backhaul links 134 may be wired or wireless.

The base stations 102 may wirelessly communicate with the LTEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (LTL) (also referred to as reverse link) transmissions from a LTE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102/LTEs 104 may use spectrum up to 7 MHz (e.g., 5, 10, 15, 20, 100, 400, etc. MHz) bandwidth per carrier allocated in a carrier aggregation of up to a total of Yx MHz (x component carriers) used for transmission in each direction. The carriers may or may not be adjacent to each other. Allocation of carriers may be asymmetric with respect to DL and LTL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/LTL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152/AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

A base station 102, whether a small cell 102' or a large cell (e.g., macro base station), may include an eNB, gNodeB (gNB), or another type of base station. Some base stations, such as gNB 180 may operate in a traditional sub 6 GHz spectrum, in millimeter wave (mmW) frequencies, and/or near mmW frequencies in communication with the UE 104. When the gNB 180 operates in mmW or near mmW frequencies, the gNB 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band (e.g., 3 GHz - 300 GHz) has extremely high path loss and a short range. The mmW base station 180 may utilize beamforming 182 with the LTE 104 to compensate for the extremely high path loss and short range.

The base station 180 may transmit a beamformed signal to the UE 104 in one or more transmit directions 108a. The LTE 104 may receive the beamformed signal from the base station 180 in one or more receive directions 108b. The LTE 104 may also transmit a beamformed signal to the base station 180 in one or more transmit directions. The base station 180 may receive the beamformed signal from the LTE 104 in one or more receive directions. The base station 180/UE 104 may perform beam training to determine the best receive and transmit directions for each of the base station 180/UE 104. The transmit and receive directions for the base station 180 may or may not be the same. The transmit and receive directions for the LTE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides LTE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include a Access and Mobility Management Function (AMF) 192, other AMFs 193, a location management function (LMF) 198, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the SMF 194 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a PS Streaming Service, and/or other IP services.

The base station may also be referred to as a gNB, Node B, evolved Node B (eNB), an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Although the present disclosure may reference 5G New Radio (NR), the present disclosure may be applicable to other similar areas, such as LTE, LTE-Advanced (LTE-A), Code Division Multiple Access (CDMA), Global System for Mobile communications (GSM), or other wireless/radio access technologies.

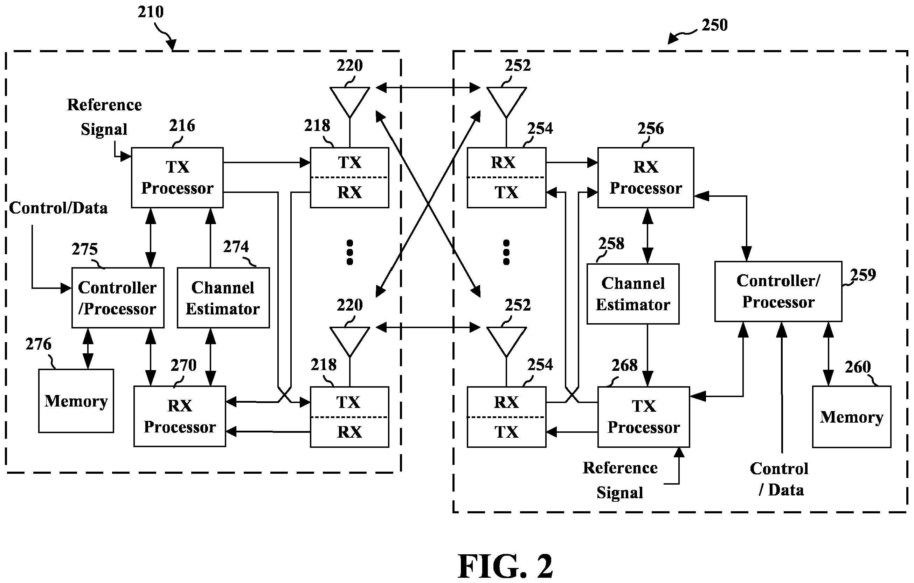

FIG. 2 is a block diagram of a base station 210 in communication with a UE 250 in an access network. In the DL, IP packets from the EPC 160 may be provided to a controller/processor 275. The controller/processor 275 implements layer 3 and layer 2 functionality. Layer 3 includes a radio resource control (RRC) layer, and layer 2 includes a packet data convergence protocol (PDCP) layer, a radio link control (RLC) layer, and a medium access control (MAC) layer. The controller/processor 275 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 216 and the receive (RX) processor 270 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 216 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 274 may be used to determine the coding and modulation scheme, as well as for spatial processing. The channel estimate may be derived from a reference signal and/or channel condition feedback transmitted by the UE 250. Each spatial stream may then be provided to a different antenna 220 via a separate transmitter 218TX. Each transmitter 218TX may modulate an RF carrier with a respective spatial stream for transmission.

At the UE 250, each receiver 254RX receives a signal through its respective antenna 252. Each receiver 254RX recovers information modulated onto an RF carrier and provides the information to the receive (RX) processor 256. The TX processor 268 and the RX processor 256 implement layer 1 functionality associated with various signal processing functions. The RX processor 256 may perform spatial processing on the information to recover any spatial streams destined for the UE 250. If multiple spatial streams are destined for the UE 250, they may be combined by the RX processor 256 into a single OFDM symbol stream. The RX processor 256 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 210. These soft decisions may be based on channel estimates computed by the channel estimator 258. The soft decisions are then decoded and deinterleaved to recover the data and control signals that were originally transmitted by the base station 210 on the physical channel. The data and control signals are then provided to the controller/processor 259, which implements layer 3 and layer 2 functionality.

The controller/processor 259 can be associated with a memory 260 that stores program codes and data. The memory 260 may be referred to as a computer- readable medium. In the UL, the controller/processor 259 provides demultiplexing between transport and logical channels, packet reassembly, deciphering, header decompression, and control signal processing to recover IP packets from the EPC 160. The controller/processor 259 is also responsible for error detection using an ACK and/or NACK protocol to support HARQ operations.

Similar to the functionality described in connection with the DL transmission by the base station 210, the controller/processor 259 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 258 from a reference signal or feedback transmitted by the base station 210 may be used by the TX processor 268 to select the appropriate coding and modulation schemes, and to facilitate spatial processing. The spatial streams generated by the TX processor 268 may be provided to different antenna 252 via separate transmitters 254TX. Each transmitter 254TX may modulate an RF carrier with a respective spatial stream for transmission. The LTL transmission is processed at the base station 210 in a manner similar to that described in connection with the receiver function at the UE 250. Each receiver 218RX receives a signal through its respective antenna 220. Each receiver 218RX recovers information modulated onto an RF carrier and provides the information to a RX processor 270.

The controller/processor 275 can be associated with a memory 276 that stores program codes and data. The memory 276 may be referred to as a computer- readable medium. In the UL, the controller/processor 275 provides demultiplexing between transport and logical channels, packet reassembly, deciphering, header decompression, control signal processing to recover IP packets from the LTE 250. IP packets from the controller/processor 275 may be provided to the EPC 160. The controller/processor 275 is also responsible for error detection using an ACK and/or NACK protocol to support HARQ operations.

New radio (NR) may refer to radios configured to operate according to a new air interface (e.g., other than Orthogonal Frequency Divisional Multiple Access (OFDMA)-based air interfaces) or fixed transport layer (e.g., other than Internet Protocol (IP)). NR may utilize OFDM with a cyclic prefix (CP) on the uplink and downlink and may include support for half-duplex operation using time division duplexing (TDD). NR may include Enhanced Mobile Broadband (eMBB) service targeting wide bandwidth (e.g. 80 MHz beyond), millimeter wave (mmW) targeting high carrier frequency (e.g. 60 GHz), massive MTC (mMTC) targeting non-backward compatible MTC techniques, and/or mission critical targeting ultra-reliable low latency communications (URLLC) service.

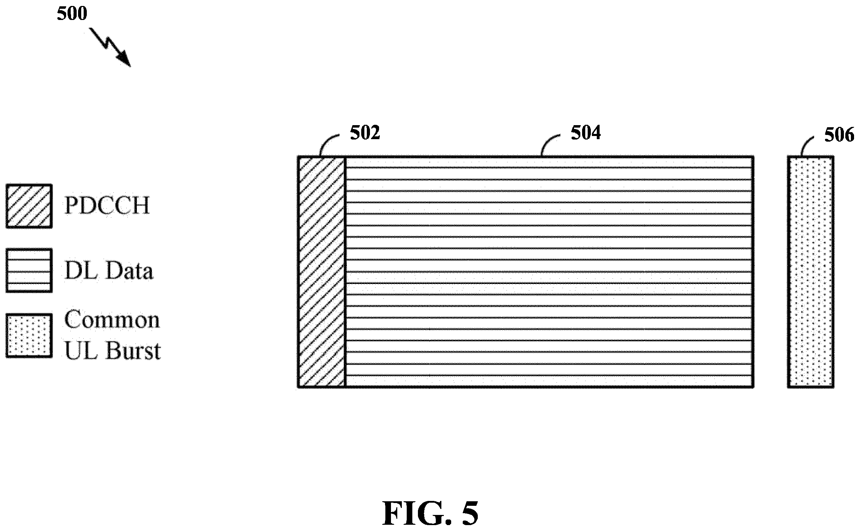

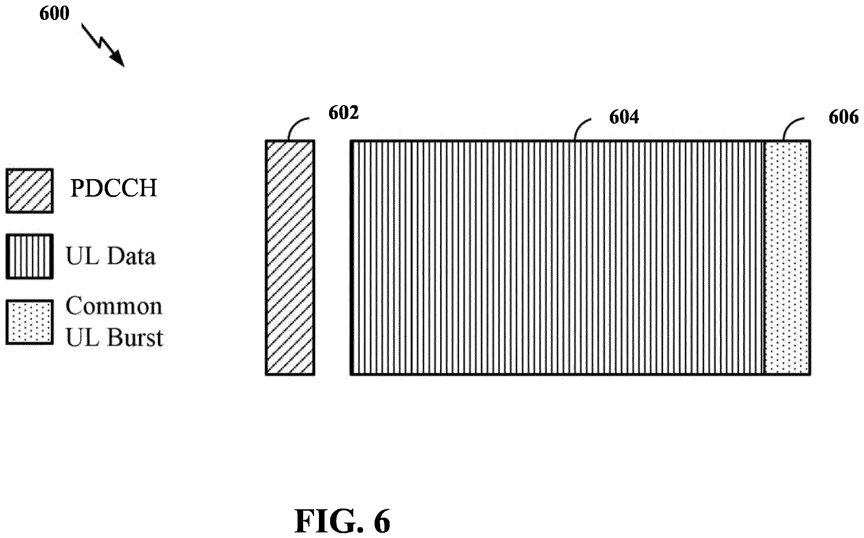

A single component carrier bandwidth of 100 MHz may be supported. In one example, NR resource blocks (RBs) may span 12 sub-carriers with a sub-carrier bandwidth of 60 kHz over a 0.25 ms duration or a bandwidth of 30 kHz over a 0.5 ms duration (similarly, 50MHz BW for 15kHz SCS over a 1 ms duration). Each radio frame may consist of 10 subframes (10, 20, 40 or 80 NR slots) with a length of 10 ms. Each slot may indicate a link direction (i.e., DL or UL) for data transmission and the link direction for each slot may be dynamically switched. Each slot may include DL/UL data as well as DL/UL control data. LTL and DL slots for NR may be as described in more detail below with respect to FIGs. 5 and 6.

The NR RAN may include a central unit (CU) and distributed units (DUs). A NR BS (e.g., gNB, 5G Node B, Node B, transmission reception point (TRP), access point (AP)) may correspond to one or multiple BSs. NR cells can be configured as access cells (ACells) or data only cells (DCells). For example, the RAN (e.g., a central unit or distributed unit) can configure the cells. DCells may be cells used for carrier aggregation or dual connectivity and may not be used for initial access, cell selection/reselection, or handover. In some cases DCells may not transmit synchronization signals (SS) in some cases DCells may transmit SS. NR BSs may transmit downlink signals to UEs indicating the cell type. Based on the cell type indication, the UE may communicate with the NR BS. For example, the UE may determine NR BSs to consider for cell selection, access, handover, and/or measurement based on the indicated cell type.

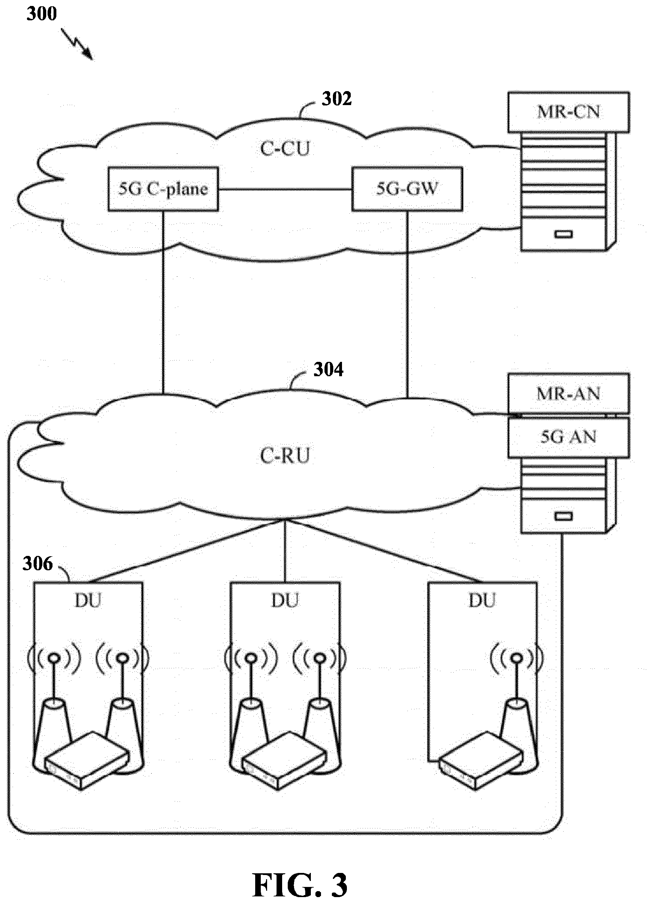

FIG. 3 illustrates an example logical architecture of a distributed RAN 300, according to aspects of the present disclosure. A 5G access node 306 may include an access node controller (ANC) 302. The ANC may be a central unit (CU) of the distributed RAN. The backhaul interface to the next generation core network (NG- CN) 304 may terminate at the ANC. The backhaul interface to neighboring next generation access nodes (NG-ANs) 310 may terminate at the ANC. The ANC may include one or more TRPs 308 (which may also be referred to as BSs, NR BSs, Node Bs, 5G NBs, APs, or some other term). As described above, a TRP may be used interchangeably with "cell."

The TRPs 308 may be a distributed unit (DU). The TRPs may be connected to one ANC (ANC 302) or more than one ANC (not illustrated). For example, for RAN sharing, radio as a service (RaaS), and service specific ANC deployments, the TRP may be connected to more than one ANC. A TRP may include one or more antenna ports. The TRPs may be configured to individually (e.g., dynamic selection) or jointly (e.g., joint transmission) serve traffic to a LTE.

The local architecture of the distributed RAN 300 may be used to illustrate fronthaul definition. The architecture may be defined that support fronthauling solutions across different deployment types. For example, the architecture may be based on transmit network capabilities (e.g., bandwidth, latency, and/or jitter). The architecture may share features and/or components with LTE. According to aspects, the next generation AN (NG-AN) 310 may support dual connectivity with NR. The NG-AN may share a common fronthaul for LTE and NR.

The architecture may enable cooperation between and among TRPs 308. For example, cooperation may be preset within a TRP and/or across TRPs via the ANC 302. According to aspects, no inter-TRP interface may be needed/present.

According to aspects, a dynamic configuration of split logical functions may be present within the architecture of the distributed RAN 300. The PDCP, RLC, MAC protocol may be adaptably placed at the ANC or TRP.

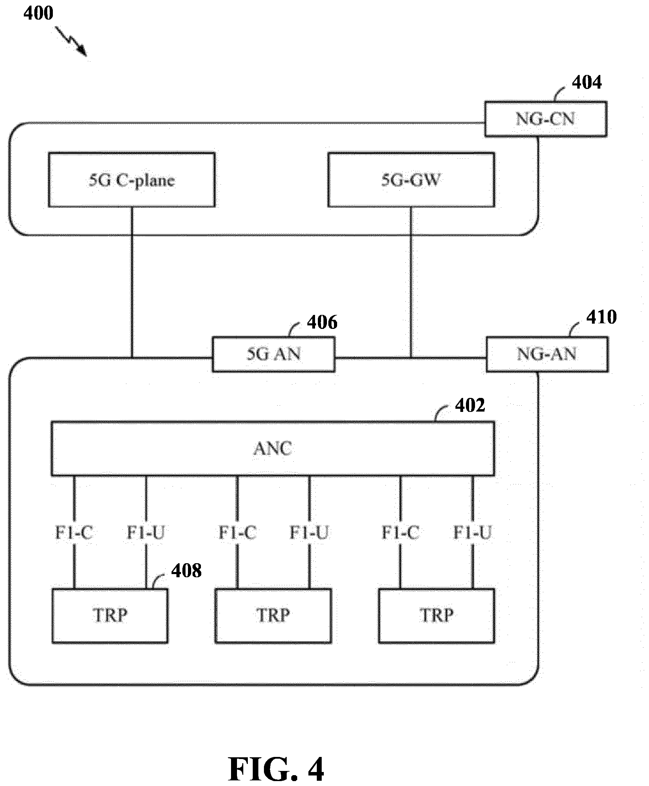

FIG. 4 illustrates an example physical architecture of a distributed RAN 400, according to aspects of the present disclosure. A centralized core network unit (C-CU) 402 may host core network functions. The C-CU may be centrally deployed. C-CU functionality may be offloaded (e.g., to advanced wireless services (AWS)), in an effort to handle peak capacity. A centralized RAN unit (C-RU) 404 may host one or more ANC functions. Optionally, the C-RU may host core network functions locally. The C- RU may have distributed deployment. The C-RU may be closer to the network edge. A distributed unit (DU) 406 may host one or more TRPs. The DU may be located at edges of the network with radio frequency (RF) functionality.

FIG. 5 is a diagram 500 showing an example of a DL-centric slot. The DL-centric slot may include a control portion 502. The control portion 502 may exist in the initial or beginning portion of the DL-centric slot. The control portion 502 may include various scheduling information and/or control information corresponding to various portions of the DL-centric slot. In some configurations, the control portion 502 may be a physical DL control channel (PDCCH), as indicated in FIG. 5. The DL-centric slot may also include a DL data portion 504. The DL data portion 504 may sometimes be referred to as the payload of the DL-centric slot. The DL data portion 504 may include the communication resources utilized to communicate DL data from the scheduling entity (e.g., UE or BS) to the subordinate entity (e.g., UE). In some configurations, the DL data portion 504 may be a physical DL shared channel (PDSCH).

The DL-centric slot may also include a common LTL portion 506. The common LTL portion 506 may sometimes be referred to as an UL burst, a common UL burst, and/or various other suitable terms. The common LTL portion 506 may include feedback information corresponding to various other portions of the DL-centric slot. For example, the common UL portion 506 may include feedback information corresponding to the control portion 502. Non-limiting examples of feedback information may include an ACK signal, a NACK signal, a HARQ indicator, and/or various other suitable types of information. The common LTL portion 506 may include additional or alternative information, such as information pertaining to random access channel (RACH) procedures, scheduling requests (SRs), and various other suitable types of information.

As illustrated in FIG. 5, the end of the DL data portion 504 may be separated in time from the beginning of the common LTL portion 506. This time separation may sometimes be referred to as a gap, a guard period, a guard interval, and/or various other suitable terms. This separation provides time for the switch-over from DL communication (e.g., reception operation by the subordinate entity (e.g., UE)) to UL communication (e.g., transmission by the subordinate entity (e.g., UE)). One of ordinary skill in the art will understand that the foregoing is merely one example of a DL-centric slot and alternative structures having similar features may exist without necessarily deviating from the aspects described herein.

FIG. 6 is a diagram 600 showing an example of an LTL-centric slot. The UL-centric slot may include a control portion 602. The control portion 602 may exist in the initial or beginning portion of the LTL-centric slot. The control portion 602 in FIG. 6 may be similar to the control portion 502 described above with reference to FIG. 5. The UL-centric slot may also include an UL data portion 604. The UL data portion 604 may sometimes be referred to as the pay load of the UL-centric slot. The UL portion may refer to the communication resources utilized to communicate UL data from the subordinate entity (e.g., UE) to the scheduling entity (e.g., LTE or BS). In some configurations, the control portion 602 may be a physical DL control channel (PDCCH).

As illustrated in FIG. 6, the end of the control portion 602 may be separated in time from the beginning of the UL data portion 604. This time separation may sometimes be referred to as a gap, guard period, guard interval, and/or various other suitable terms. This separation provides time for the switch-over from DL communication (e.g., reception operation by the scheduling entity) to UL communication (e.g., transmission by the scheduling entity). The LTL-centric slot may also include a common LTL portion 606. The common LTL portion 606 in FIG. 6 may be similar to the common LTL portion 506 described above with reference to FIG. 5. The common LTL portion 606 may additionally or alternatively include information pertaining to channel quality indicator (CQI), sounding reference signals (SRSs), and various other suitable types of information. One of ordinary skill in the art will understand that the foregoing is merely one example of an UL-centric slot and alternative structures having similar features may exist without necessarily deviating from the aspects described herein.

In some circumstances, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet of Everything (IoE) communications, IoT communications, mission-critical mesh, and/or various other suitable applications. Generally, a sidelink signal may refer to a signal communicated from one subordinate entity (e.g., UE1) to another subordinate entity (e.g., UE2) without relaying that communication through the scheduling entity (e.g., LTE or BS), even though the scheduling entity may be utilized for scheduling and/or control purposes. In some examples, the sidelink signals may be communicated using a licensed spectrum (unlike wireless local area networks, which typically use an unlicensed spectrum).

To transmit on a sidelink (SL) over unlicensed spectrum (SL over unlicensed spectrum, SL-U), a LTE performs a channel access/Listen Before Talk (LBT) procedure before transmission. After a successful channel access procedure (e.g., Type 1 channel access), the LTE can occupy the channel for a period of time, which is the channel occupancy time (COT). But there is a gap between successful channel access procedure and the future COT start time. During this gap, other systems such as WiFi could perform carrier sensing and start transmission during the gap, as the gap requirements for those systems may be smaller than the requirement on the sidelink. As such, collisions may occur once the transmission on the sidelink starts during the COT.

Every OFDM symbol has a cyclic prefix (CP) added at the beginning to mitigate inter-symbol interference. CP extension (CPE) extends the CP duration in front of an OFDM symbol transmission. CPE can be used before PSCCH/PSSCH transmission on a sidelink to occupy the channel earlier. This helps gain channel access, especially outside channel occupancy time (COT). CPE is an additional waveform before the regular CP of the OFDM symbol, effectively extending the CP duration. This is done by starting transmission earlier than the normal OFDM symbol start time. By utilizing CPE in the gap prior to the COT, the UE keeps the channel occupied before its COT starts. This prevents other systems from accessing the channel in the gap.

A CPE of a signal (*e.g*., a control signal or a data signal) can be performed at a single (default) starting position and/or a position selected from multiple starting positions within a symbol (*i.e.,* an OFDM symbol period) prior to the first symbol that contains the signal. The number of CPE starting positions within a symbol and the gap between two consecutive CPE starting positions can be configured (preconfigured or configured) at a transmitting UE and/or signaled to the transmitting UE.

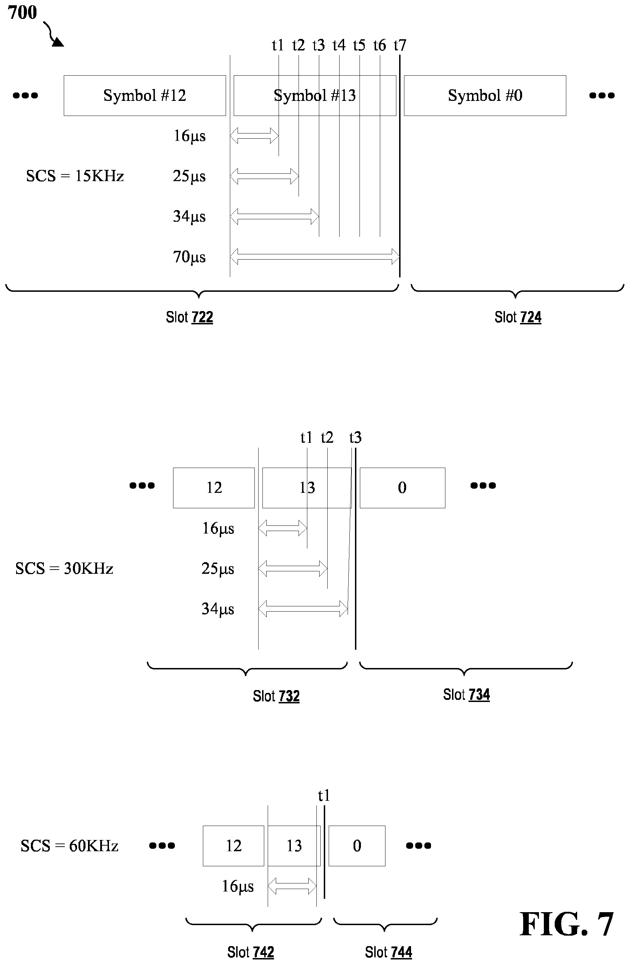

FIG. 7 is a diagram 700 illustrating CPE starting positions for the case that the max length of CPE is one symbol. In one example, slots 722, 724 are two consecutive slots in accordance with a SCS of 15KHz. Each of the slots 722, 724 includes 14 symbols. A first CPE starting position can be set at 16us after the starting position/leading boundary of a symbol, which is the last symbol carrying traffic of the immediately previous transmission, and other CPE starting positions can be set with a gap from the previous CPE starting position, where the gap can be 9us for example.

In this example, OFDM symbol #0 of the slot 724, which may contain PSCCH/PSSCH, utilizes a CPE. In symbol #13 of the slot 722, exemplary multiple CPE starting positions 11-17 are at 16us, 25us, 34us, ..., 70us, respectively.

In another example, slots 732, 734 are two consecutive slots in accordance with a SCS of 30KHz. Each of the slots 732, 734 includes 14 symbols. In this example, OFDM symbol #0 of the slot 734, which may contain PSCCH/PSSCH, utilizes a CPE. In symbol #13 of the slot 732, exemplary multiple CPE starting positions 11-13 are at 16us, 25us, 34us, ..., 70us, respectively.

In yet another example, slots 742, 744 are two consecutive slots in accordance with a SCS of 60KHz. Each of the slots 742, 744 includes 14 symbols. In this example, OFDM symbol #0 of the slot 744, which may contain PSCCH/PSSCH, utilizes a CPE. In symbol #13 of the slot 742, exemplary CPE starting position t1 is at 16us.

In general, on a sidelink, before a UE transmits a control or data signal, the UE transmits a CPE at a determined CPE starting position.

As described *supra,* multiple CPE starting positions for PSCCH and PSSCH sidelink transmissions are supported. Further, in frequency division multiplexing (FDM), different UEs can transmit simultaneously on separate portions of the band. In certain configurations, all LTEs gained access to a channel on the sidelink for a COT select the same CPE starting position prior to their transmission. If different LTEs were to use different CPE starting positions, it could lead to the situation where an earlier CPE blocks the sensing of a later CPE.

For example, UE-1 has gained access to a first portion of the band for the COT and determines to start its CPE transmission from position T1 based on sensing the channel is idle. Separately, LTE-2 has gained access to a second portion of the band and selects a later CPE start time of T2, again sensing the channel to be free. At T1, UE-1 begins transmitting its CPE. When time T2 comes, right before UE-2 initiates its planned CPE, UE-2 does a quick carrier sense check. This allows UE-2 to detect if the channel conditions have changed since an earlier channel access procedure. During this carrier sense, LTE-2 detects LTE-1's ongoing CPE transmission at that time T2. Since the channel is now sensed to be busy, UE-2 refrains from transmitting its CPE. The earlier CPE from UE-1 has blocked UE-2's transmission in the COT.

By aligning the CPE start locations across UEs, they can reliably perform simultaneous frequency division multiplexed transmissions without collisions or blocking.

The PSCCH/PSSCH transmission from a UE can occupy a partial or full resource block (RB) set allocation on the frequency band. A partial RB set allocation means the transmission only uses some of the available RBs in the RB set, while a full RB set allocation utilizes all available RBs.

To coordinate their transmissions, LTEs can transmit resource reservation information indicating which specific RBs they intend to occupy for their future transmissions. This reservation can also be detected by other UEs when transmitted.

If a UE detects a reservation for the same slot (e.g., the slot 724) and using the same RB set that the UE wants to transmit on, it implies utilizing the FDM transmission scheme and a risk of collision. In this case, the UE uses a first technique described *infra,* which is a preconfigured default CPE starting position. Using the same default CPE location aligns the transmission and enables frequency division multiplexing across UEs, avoiding collisions.

On the other hand, if no resource reservation is detected for the same slot and RB set the UE wants to transmit on, it suggests not utilizing the FDM transmission scheme and a low chance of collisions with other UEs. In this case, the UE can use a second technique described *infra* for CPE selection, which is random CPE position based on a priority of transmission. Since collision probability is already low, aligned CPE is not needed. The UE can randomly select from the available CPE positions based on priority.

In a first scenario, when a LTE determines that its PSCCH/PSSCH transmission initiating a COT are under a FDM transmission scheme, the UE utilizes a first technique. More specifically, a single CPE starting position within a prior symbol immediately before the start COT is preconfigured and/or signaled as a default starting position. The prior symbol and the initial symbol of the COT are consecutive symbols. The single CPE starting position may be any one of the candidate CPE starting positions.

In the example of slots 722, 724, the COT starts at the slot 724. The UE is configured with a single, default starting position, which may be any one of the t1 to t7 in the symbol #13. Accordingly, the LTE transmits a CPE at the single, default CPE starting position in the symbol #13.

The position of single, default CPE starting position can be (pre-)configured and/or indicated. For example, it can be (pre-)configured and/or indicated before the 1st one of the multiple CPE starting positions, and/or after the last one of the multiple CPE starting positions, and/or in the middle of multiple CPE starting positions. Additionally, the single CPE starting position can be (pre-)configured and/or indicated as one of the multiple CPE starting positions or not.

When a UE determines that its PSCCH/PSSCH transmission initiating the COT are not under a FDM transmission scheme, the UE utilizes a second technique. More specifically, the candidate CPE starting positions are divided into different groups each associated with a respective priority of the PSCCH/PSSCH transmission. The UE randomly selects a CPE starting position from the group of candidate CPE starting positions that are associated with the priority of the PSCCH/PSSCH transmission to be made by the UE.

The priority of PSCCH/PSSCH transmission refers to the relative importance or urgency of the control signaling and data being transmitted over the sidelink via the PSCCH and PSSCH channels respectively. Priority is used to prioritize certain types of sidelink transmissions over others.

Priority levels can be configured by the network, such as the base station assigning priority values or ranges to different sidelink logical channels. For example, a safety-related V2X message like an emergency brake warning could be assigned a higher priority than regular driving status updates. Priority can also be based on transmission characteristics. For instance, retransmissions may get higher priority than initial transmissions.

Higher priority PSCCH/PSSCH transmissions typically get access to better radio resources. For CPE selection specifically, higher priority transmissions may get earlier CPE positions to access the channel faster before lower priority transmissions. This ensures urgent services like safety messages have the best chance to access the channel with minimum delay.

In the example of slots 722, 724, the COT starts at the slot 724. The candidate CPE starting positions t1 to t2 may be associated with a first priority of the PSCCH/PSSCH transmissions; the candidate CPE starting positions t3 to t4 may be associated with a second priority of the PSCCH/PSSCH transmissions; the candidate CPE starting positions t5 to t7 may be associated with a third priority of the PSCCH/PSSCH transmissions. The UE may determine that its PSCCH/PSSCH transmission has a first priority. Accordingly, the UE randomly selects a CPE starting position from t1 and t2, and transmits a CPE at that position in the symbol #13.

In a second scenario, a UE may use the first technique and the second technique described *supra* to transmit CPEs for additional signals within an existing COT. In this scenario, in the examples of the slots 722, 724, they are in the same COT; in the examples of the slots 732, 734, they are in the same COT; and in the examples of the slots 742, 744, they are in the same COT. A UE may perform a Type 2 channel access to transmit additional PSCCH/PSSCH within the COT. The UE is configured with a single default CPE starting position as well as multiple candidate CPE starting positions based on priorities. In the examples of the slots 722, 724, the LTE is to transmit additional PSCCH/PSSCH transmission starting at the symbol #0 in the slot 724, which is in the same COT as the slot 722. The UE transmits a CPE at one of the CPE starting positions in the symbol #13 in the slot 722.

In this scenario, the UE applies the same CPE selection method as described earlier for the case when the UE performs a Type 1 channel access to initiate a COT. Specifically: if the UE transmits or detects a resource reservation for the same slot (*e.g*., the slot 724) and RB set(s) as its intended PSCCH/PSSCH transmission within the COT, the UE selects the preconfigured default CPE starting position (the first technique) for transmissions under the FDM transmission scheme. Otherwise, the UE randomly selects a CPE starting position from the multiple candidate positions configured based on priority of the PSCCH/PSSCH transmission (the second technique) for transmissions under the non-FDM transmission scheme.

For PSCCH/PSSCH transmission, the default CPE starting position can be preconfigured as the first one of the set of all candidate CPE starting positions. For example, the CPE starting position index Δ*ᵢ* can be always 1 for one symbol gap, and can be always 3 in 30kHz and 60kHz for two symbol gap.

For PSFCH transmissions, a single CPE starting position is preconfigured per resource pool. The preconfigured value for the PSFCH CPE starting position is selected from the set of all candidate CPE starting positions defined in the 3GPP specification TS38.211.

In other words, the base station predefines one specific CPE starting position for PSFCH transmissions for each resource pool. The starting position is chosen from the candidate CPE positions. The UE then uses this single preconfigured position when transmitting a PSFCH in the given resource pool.

The base station configures one or more PSFCH resource pools, each indicating a set of allowed time/frequency resources for PSFCH. For each resource pool, the base station preconfigures a single CPE starting position that UEs should use when transmitting a PSFCH in that pool. The UE is informed of the CPE starting position associated with each resource pool it is configured with. When the UE transmits a PSFCH in a given resource pool, it uses the CPE starting position preconfigured for that pool.

For S-SSB transmissions, a single CPE starting position is preconfigured. The preconfigured value for the S-SSB CPE starting position is selected from the set of all candidate CPE starting positions defined in "3GPP TS 38.211 V17.3.0 (2022-09) Technical Specification; 3rd Generation Partnership Project; Technical Specification Group Radio Access Network; NR; Physical channels and modulation (Release 17)" (3GPP TS 38.211), which is expressly incorporated by reference herein in their entirety.

In other words, the base station predefines one specific CPE starting position for S-SSB transmissions. The starting position is chosen from the candidate CPE positions. The SyncRef UE then uses this single preconfigured position when transmitting a S-SSB.

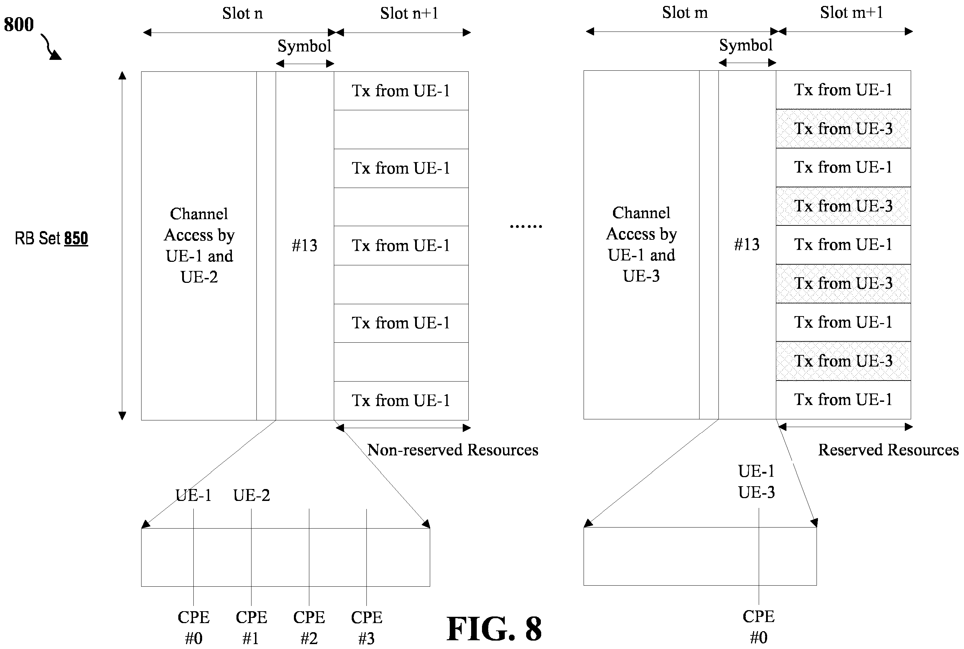

FIG. 8 is diagram 800 illustrating CPE selection. In a first example, slots n and n+1 are two consecutive slots. Both UE-1 and UE-2 gained access to an RB set 850 for a COT on the sidelink through a channel access procedure such as channel access procedure in the slot n. The COT starts at the slot n+1. Before the LTE-1 and UE-2 start PSCCH/PSSCH transmissions in slot n+1, both the LTE-1 and LTE-2 are to transmit a CPE in the last symbol (symbol #13) of the slot n.

In this example, neither the UE-1 nor the UE-2 transmits a resource reservation for resources in the RB set 850 and the slot n+1 or detects any such reservations. This means there is no overlapping resource reservation among the UEs. Both the UE-1 and the UE-2 determine that the FDM transmission scheme is not utilized and CPE starting positions are determined based on priorities.

In this example, both the LTE-1 and UE-2 are configured with 4 CPE starting positions #0 to #3. Further, the CPE starting positions #0, #1, and #2 are associated with a first priority of the PSCCH/PSSCH transmission. The CPE starting position #3 is associated with a second priority of the PSCCH/PSSCH transmission. Further, the PSCCH/PSSCH transmissions of the UE-1 and the UE-2 both have the first priority. Accordingly, the UE-1 randomly selects the CPE starting position #0, and the UE-2 randomly selects the CPE starting position #1 from the candidate positions #0, #1, #2 associated with the first priority.

The LTE-1 starts transmitting a CPE at position #0 in symbol #13 of slot n. Since position #0 starts earlier than position #1, right before the LTE-2 initiates its planned CPE transmission at position #1, the UE-2 performs a brief carrier sensing check. During this sensing, the UE-2 detects the ongoing CPE transmission from the LTE-1 at that time. Since the channel is now sensed to be busy, the UE-2 refrains from transmitting its own CPE and subsequent PSCCH/PSSCH transmission. Therefore, in slot n+1, only the UE-1 transmits its PSCCH/PSSCH on the RB set 850.

In a second example, slots m and m+1 are two consecutive slots. Both UE-1 and UE-3 gained access to the RB set 850 for a COT on the sidelink through a channel access procedure such as channel access procedure in the slot m. The COT starts at the slot m+1. Before the UE-1 and LTE-3 start PSCCH/PSSCH transmissions in slot m+1, both the LTE-1 and LTE-3 are to transmit a CPE in the last symbol (symbol #13) of the slot m.

In this example, the UE-1 and the UE-3 both transmit resource reservations for resources in the RB set 850 and the slot m+1. Further, the LTE-1 and the LTE-3 detect the reservations transmitted by each other. This means there is overlapping resource reservation among the UEs.

Since there are overlapping resource reservations, both the UE-1 and UE-3 determine that the FDM transmission scheme is utilized. As described previously, when FDM transmission scheme is needed, the LTEs will select the preconfigured single, default CPE starting position (*e.g.,* CPE starting position #0).

Accordingly, both the LTE-1 and UE-3 transmit a CPE from the default CPE starting position in symbol #13 of slot m. Since UE-1 and UE-3 use the same default position, their CPE transmissions will align in time and not block each other. This allows both UEs to successfully start their PSCCH/PSSCH transmissions in RB set 850 of slot m+1 using FDM.

As such, when overlapping resource reservations are detected, indicating a need for FDM transmission, the UEs will align their CPE transmissions by using the default CPE starting position. This prevents blocking and enables frequency division multiplexed transmissions across multiple UEs.

In summary, for PSCCH/PSSCH transmission, whether Type 1 or Type 2 channel access is performed, and whether inside or outside COT, CPE selection can be determined based on whether FDM transmission is needed. In certain configurations, a UE can determine whether FDM transmission is needed based on whether resource reservation is transmitted or detected to accordingly select CPE. As aforementioned, when resource reservation exists, multiple UEs can select a single CPE starting position for FDM transmission; when resource reservation does not exist, multiple LTEs can select from one or multiple CPE starting positions based on priority (or randomly for same priority) for transmission.

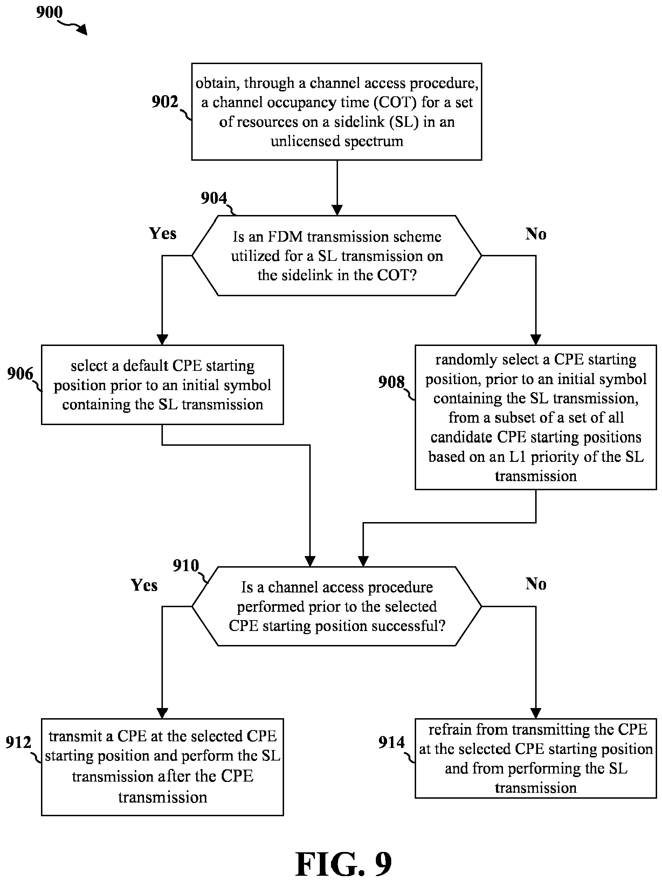

FIG. 9 is a flow chart 900 of a method (process) for transmitting a CPE. The method may be performed by a UE. In operation 902, the UE obtains, through a channel access procedure, a channel occupancy time (COT) for a set of resources on a sidelink (SL) in an unlicensed spectrum. In certain configurations, the set of resources comprises a set of slots and a set of RB sets.

In operation 904, the UE determines whether a frequency division multiplexing (FDM) scheme is utilized for a SL transmission on the sidelink in the COT. In certain configurations, the FDM transmission scheme is determined to be utilized when a resource reservation for the set of resources of an intended SL transmission in the COT is transmitted or detected. The FDM transmission scheme is determined not to be utilized when a resource reservation for the set of resources of an intended SL transmission in the COT is not transmitted and detected.

When the FDM transmission scheme is utilized, in operation 906, the UE selects a default CPE starting position prior to an initial symbol containing the SL transmission. In certain configurations, the default CPE starting position is preconfigured to be one of the set of all candidate CPE starting positions. In certain configurations, the default CPE starting position is preconfigured to be independent from the set of all candidate CPE starting positions.

When the FDM transmission scheme is not utilized, in operation 908, the UE randomly selects a CPE starting position, prior to an initial symbol containing the SL transmission, from a subset of a set of all candidate CPE starting positions based on an L1 priority of the SL transmission. In certain configurations, the subset contains at least one CPE starting position selected from the set of all candidate CPE starting positions according to an L1 priority by pre-configuration. The CPE starting position is randomly selected from the subset associated with the L1 priority of the SL transmission.

In operation 910, the LTE determines whether a channel access procedure performed prior to the selected CPE starting position is successful. When the channel access procedure is successful, in operation 912, the LTE transmits a CPE at the selected CPE starting position and performs the SL transmission after the CPE transmission. When the channel access procedure is not successful, in operation 914, the UE refrains from transmitting the CPE at the selected CPE starting position and from performing the SL transmission.

In certain configurations, the CPE can be transmitted outside a COT and inside a COT. In certain configurations, the SL transmission comprises at least one of a physical sidelink control channel (PSCCH) transmission and a physical sidelink shared channel (PSSCH) transmission. In certain configurations, the default CPE starting position before the PSCCH or PSSCH transmission inside the COT is an initial one of the set of all candidate CPE starting positions. In certain configurations, the initial symbol containing the SL transmission is an initial symbol of the COT. In certain configurations, the initial symbol containing the SL transmission is not an initial symbol of the COT.

In certain configurations, the SL transmission includes a physical sidelink feedback channel (PSFCH) transmission, where a single CPE starting position is preconfigured from the set of all candidate CPE starting positions.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A method (900) of wireless communication of a user equipment (250), LTE, comprising:
obtaining (902), through a channel access procedure, a channel occupancy time, COT, for a set of resources on a sidelink, SL, in an unlicensed spectrum;
determining (904) whether a frequency division multiplexing, FDM, transmission scheme is utilized for a SL transmission on the sidelink in the COT;
selecting (906, 908) a cyclic prefix extension, CPE, starting position prior to an initial symbol containing the SL transmission, wherein the CPE starting position is a default CPE starting position when the FDM transmission scheme is utilized, wherein the CPE starting position is randomly selected from a subset of a set of all candidate CPE starting positions based on an L1 priority of the SL transmission when the FDM transmission scheme is not utilized; and
transmitting (912) a CPE at the selected CPE starting position and performing the SL transmission after the CPE transmission.

2. The method (900) of claim 1, wherein the FDM transmission scheme is determined to be utilized when a resource reservation for the set of resources of an intended SL transmission in the COT is transmitted or detected , wherein the FDM transmission scheme is determined not to be utilized when a resource reservation for the set of resources of an intended SL transmission in the COT is not transmitted and detected.

3. The method (900) of claim 1, wherein the default CPE starting position is preconfigured to be one of the set of all candidate CPE starting positions.

4. The method (900) of claim 1, wherein the default CPE starting position is preconfigured to be independent from the set of all candidate CPE starting positions.

5. The method (900) of claim 1, wherein the subset contains at least one CPE starting position selected from the set of all candidate CPE starting positions according to an L1 priority by pre-configuration.

6. The method (900) of claim 5, wherein the CPE starting position is randomly selected from the subset associated with the L1 priority of the SL transmission.

7. The method (900) of claim 1, wherein the CPE can be transmitted outside a COT and inside a COT.

8. The method (900) of claim 1, wherein the SL transmission comprises at least one of a physical sidelink control channel, PSCCH, transmission and a physical sidelink shared channel, PSSCH, transmission.

9. The method (900) of claim 8, wherein the default CPE starting position before the PSCCH or PSSCH transmission inside the COT is an initial one of the set of all candidate CPE starting positions.

10. The method (900) of claim 1, wherein the initial symbol containing the SL transmission is an initial symbol of the COT.

11. The method (900) of claim 1, wherein the initial symbol containing the SL transmission is not an initial symbol of the COT.

12. The method (900) of claim 1, further comprising:
performing a channel access procedure prior to the selected CPE starting position, wherein the CPE is transmitted at the selected CPE starting position when the channel access procedure is successful (912); and
refraining (914) from transmitting the CPE at the selected CPE starting position when the channel access procedure is not successful.

13. The method (900) of claim 1, wherein the SL transmission comprises a sidelink synchronization signal block, S-SSB, transmission, wherein a single CPE starting position is preconfigured from the set of all candidate CPE starting positions to be used before the S-SSB transmission.

14. The method (900) of claim 1, wherein the SL transmission comprises a physical sidelink feedback channel, PSFCH, transmission, wherein a single CPE starting position is preconfigured from the set of all candidate CPE starting positions to be used before the PSFCH transmission.

15. An apparatus (250) for wireless communication, the apparatus (250) being a user equipment, LTE, comprising:
a memory (260); and
at least one processor (259) coupled to the memory (260) and configured to:
obtain (902), through a channel access procedure, a channel occupancy time, COT, for a set of resources on a sidelink, SL, in an unlicensed spectrum;
determine (904) whether a frequency division multiplexing, FDM, scheme is utilized for a SL transmission on the sidelink in the COT;
select (906, 908) a cyclic prefix extension, CPE, starting position prior to an initial symbol containing the SL transmission, wherein the CPE starting position is a default CPE starting position when the FDM transmission scheme is utilized, wherein the CPE starting position is randomly selected from a subset of a set of all candidate CPE starting positions based on an L1 priority of the SL transmission when the FDM transmission scheme is not utilized; and
transmit (912) a CPE at the selected CPE starting position and perform the SL transmission after the CPE transmission.
